(19) **Europäisches Patentamt**
**European Patent Office**
**Office européen des brevets**

(11) **EP 2 690 426 B1**

(12) **EUROPEAN PATENT SPECIFICATION**

(45) Date of publication and mention
of the grant of the patent:
**24.04.2019 Bulletin 2019/17**

(51) Int Cl.:
*G01N 21/3581* *(2014.01)*     *G01N 21/552* *(2014.01)*

(21) Application number: **12760839.6**

(86) International application number:
**PCT/JP2012/054990**

(22) Date of filing: **28.02.2012**

(87) International publication number:
**WO 2012/128001 (27.09.2012 Gazette 2012/39)**

(54) **TOTAL REFLECTION SPECTROSCOPIC MEASUREMENT METHOD**

Spektroskopisches Totalreflexions-Messverfahren

PROCÉDÉ DE MESURE SPECTROSCOPIQUE EN RÉFLEXION TOTALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.03.2011 JP 2011063079**

(43) Date of publication of application:
**29.01.2014 Bulletin 2014/05**

(73) Proprietor: **Hamamatsu Photonics K.K.
Hamamatsu-shi, Shizuoka 435-8558 (JP)**

(72) Inventors:
• **AKIYAMA Kouichiro
Hamamatsu-shi
Shizuoka 435-8558 (JP)**
• **KAWADA Yoichi
Hamamatsu-shi
Shizuoka 435-8558 (JP)**
• **YASUDA Takashi
Hamamatsu-shi
Shizuoka 435-8558 (JP)**
• **NAKANISHI Atsushi
Hamamatsu-shi
Shizuoka 435-8558 (JP)**
• **TAKAHASHI Hironori
Hamamatsu-shi
Shizuoka 435-8558 (JP)**

(74) Representative: **Boult Wade Tennant LLP
Verulam Gardens
70 Gray's Inn Road
London WC1X 8BT (GB)**

(56) References cited:
EP-A1- 1 630 542     EP-A1- 2 128 600
JP-A- 2001 070 287   JP-A- 2007 309 858
JP-A- 2008 164 594   JP-A- 2008 224 451
JP-B2- 3 950 818     US-A1- 2004 207 846
US-A1- 2007 229 094

• **David A. Newnham ET AL: "Pulsed Terahertz
Attenuated Total Reflection Spectroscopy",
APPLIED SPECTROSCOPY., vol. 62, no. 4, 1 April
2008 (2008-04-01), pages 394-398, XP055368449,
US ISSN: 0003-7028, DOI:
10.1366/000370208784046731**
• **EKGASIT S ET AL: "OPTICAL CONTACT IN
ATR/FT-IR SPECTROSCOPY", APPLIED
SPECTROSCOPY, THE SOCIETY FOR APPLIED
SPECTROSCOPY. BALTIMORE, US, vol. 55, no.
10, 1 October 2001 (2001-10-01), pages 1352-1359,
XP001125034, ISSN: 0003-7028, DOI:
10.1366/0003702011953478**
• **BIST H ET AL: "Techniques for obtaining far
infrared transmission spectra of high Tc,
superconductors and related synthetic
precursors", SPECTROCHIMICA ACTA. PART A:
MOLECULAR SPECTROSCOPY, PERGAMON
PRESS, OXFORD, GB, vol. 50, no. 3, 1 March 1994
(1994-03-01), pages 473-479, XP026604454, ISSN:
0584-8539, DOI: 10.1016/0584-8539(94)80162-2
[retrieved on 1994-03-01]**
• **Tomas Hirschfeld: "Solution for the Sample
Contact Problem in ATR", Applied Spectroscopy,
vol. 21, no. 5, 1 January 1967 (1967-01-01), pages
335-336, XP055368543,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **TODD W DU BOSQ ET AL: "Terahertz/Millimeter Wave Characterizations of Soils for Mine Detection: Transmission and Scattering", INTERNATIONAL JOURNAL OF INFRARED AND MILLIMETER WAVES, KLUWER ACADEMIC PUBLISHERS-PLENUM PUBLISHERS, NE, vol. 29, no. 8, 3 June 2008 (2008-06-03), pages 769-781, XP019605426, ISSN: 1572-9559**

## Description

### Technical Field

The present invention relates to a total reflection spectroscopic measurement method using a terahertz wave.

### Background Art

Conventionally known as a total reflection spectroscopic method is one comprising arranging an object to be measured on a total reflection surface of a prism and measuring an optical constant concerning the object according to a terahertz wave totally reflected by the total reflection surface after passing the inside of the prism. In such a total reflection spectroscopic measurement method, an evanescent component emitted when the terahertz wave is totally reflected and the object interact with each other, whereby the terahertz wave changes between before and after the total reflection. The optical constant concerning the object is measured according to the change occurring in the terahertz wave.

In order for the evanescent component and the object to interact with each other, it is necessary for the total reflection surface and the object to be located sufficiently close to each other. This is important in particular when measuring optical constants concerning powdery or flaky solid objects. Therefore, a method which totally reflects a terahertz wave by a total reflection surface while pressing the object onto the total reflection surface and the like have conventionally been employed (see, for example, Patent Literature 1).

### Citation List

### Patent Literature

Patent Literature 1: Japanese Patent Publication No. 3950818

EP 2128600 describes a total reflection terahertz wave measuring apparatus configured to acquire information on a subject S by a total reflection measurement method by use of a terahertz wave. The subject may be a powder sample which is pressed against the total reflection prism to achieve better contact.

EP 1630542 describes a reflection-type terahertz spectrometer and spectrometric method. The spectrometer is characterized in that the irradiating means has at least one planar interface and a refractive index greater than that of a peripheral region contacting the planar interface and is disposed between the input and output optical paths.

### Summary of Invention

### Technical Problem

Even when a method of pressing the object against the total reflection surface is employed as conventionally done, however, there is a case where a minute gap occurs between the total reflection surface and the object. This minute gap varies for each measurement, whereby the interaction between the evanescent component and the object may fluctuate upon each measurement. When the object is pressed against the total reflection surface with an excessive force in order to eliminate the minute gap, on the other hand, the prism may be deformed or damaged.

For solving the problem mentioned above, it is an object of the present invention to provide a total reflection spectroscopic measurement method which can accurately measure optical constants concerning solid objects.

### Solution to Problem

For achieving the above-mentioned object, the total reflection spectroscopic measurement method in accordance with the present invention is a total reflection spectroscopic measurement method as set out in claim 1.

This total reflection spectroscopic measurement method interposes a liquid at least between the total reflection surface and the object. Therefore, a force such as an adhesion force, for example, acting between the liquid and the object, can place the object closer to the total reflection surface, thereby stably generating the interaction between the evanescent component and the object. On the other hand, it is unnecessary to press the object physically against the total reflection surface, whereby the prism can be inhibited from being deformed or damaged. Hence, by utilizing the adhesion force and the like, this method can accurately measure the optical constant concerning the object. The liquid used is incapable of dissolving the object and thus does not inhibit the optical constant concerning the object from being measured.

The liquid incapable of absorbing the terahertz wave inhibits the liquid from absorbing the terahertz wave, whereby the optical constant concerning the object can be measured more accurately.

Preferably, the optical constant concerning the object is measured while using a terahertz wave totally reflected when only the liquid is arranged on the total reflection surface as a reference terahertz wave. This can cancel out influences of absorption of the terahertz wave by the above-mentioned liquid and the like, whereby the optical constant concerning the object can be measured more accurately.

Preferably, as the liquid, a fluorine-based inert liquid is used. In this case, using the fluorine-based inert liquid makes many materials insoluble in the liquid and inhibits the liquid from absorbing the terahertz wave. The fluorine-based inert liquid is hard to volatilize and thus prevents volatile components from adversely affecting the surroundings and suppresses environmental load.

Preferably, silicone oil is used as the liquid. In this case, using silicone oil also makes many materials insoluble in the liquid and inhibits the liquid from absorbing the terahertz wave. Silicone oil is hard to volatilize and thus prevents volatile components from adversely affecting the surroundings and suppresses environmental load.

Preferably, a ring-shaped enclosure is arranged on the total reflection surface, and the liquid is disposed within the enclosure. This can retain the liquid on the total reflection surface, whereby the liquid can securely be interposed between the total reflection surface and the object.

**Advantageous Effects of Invention**

The total reflection spectroscopic measurement method in accordance with the present invention can accurately measure optical constants concerning solid objects.

**Brief Description of Drawings**

Fig. 1 is a diagram illustrating a total reflection spectrometer achieving the total reflection spectroscopic measurement method in accordance with the present invention;
Fig. 2 is a cross-sectional view of an internal total reflection prism used in the total reflection spectrometer illustrated in Fig. 1;
Fig. 3 is a flowchart illustrating a procedure of deriving optical constants concerning an object to be measured;
Fig. 4 is a set of diagrams illustrating a procedure of arranging a powdery object to be measured;
Fig. 5 is a set of diagrams illustrating a procedure of arranging a flaky object to be measured;
Fig. 6 is a set of charts illustrating an example of absorption coefficients of objects to be measured; and
Fig. 7 is a diagram illustrating an example of arranging a liquid within a ring-shaped enclosure arranged on a total reflection surface.

**Description of Embodiments**

In the following, preferred embodiments of the total reflection spectroscopic measurement method in accordance with the present invention will be explained in detail with reference to the drawings.

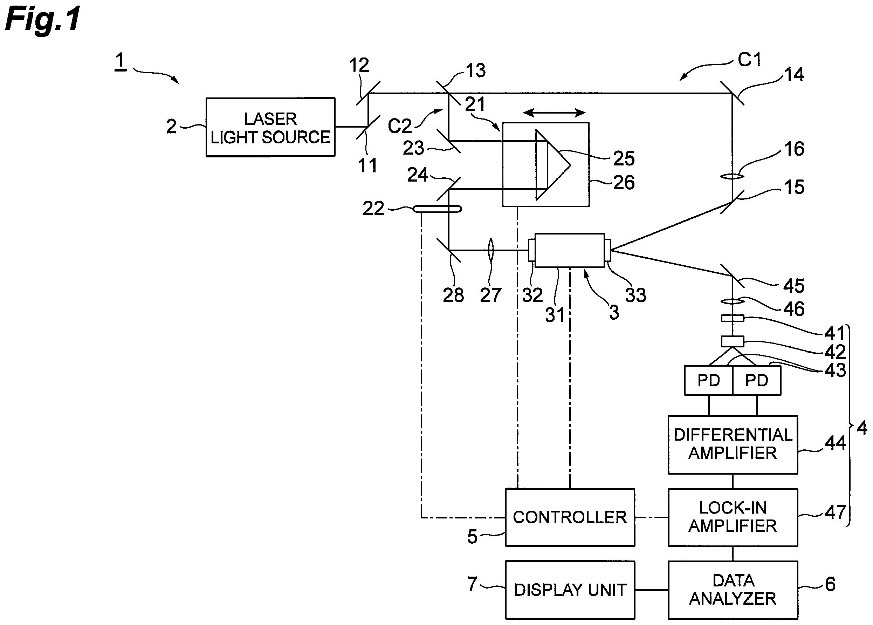

Fig. 1 is a diagram illustrating a total reflection spectrometer achieving the total reflection spectroscopic measurement method in accordance with the present invention. As illustrated in the drawing, this total reflection spectrometer 1 comprises a laser light source 2 for emitting laser light, an integral prism 3 in which a terahertz-wave generator 32, an internal total reflection prism 31, and a terahertz-wave detector 33 are integrated together, and a detection unit 4 for detecting a terahertz wave. The total reflection spectrometer 1 also comprises a controller 5 for controlling operations of the constituents mentioned above, a data analyzer 6 for analyzing data according to an output from the detection unit 4, and a display unit 7 for displaying results of processing in the data analyzer 6.

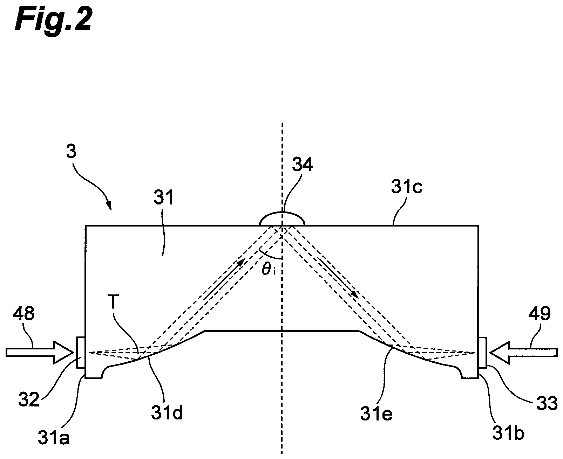

The laser light source 2 is a light source for generating a femtosecond pulsed laser. The laser light source 2 issues a femtosecond pulsed laser having an average power of 120 mW and a repetition rate of 77 MHz, for example. The femtosecond pulsed laser emitted from the laser light source 2 impinges on mirrors 11, 12 in sequence and then is split into two, i.e., pump light 48 and probe light 49, by a beam splitter 13 (see Fig. 2). A probe light optical path C1 through which the probe light 49 propagates is provided with mirrors 14, 15 and a lens 16, so that the probe light 49 is converged by the lens 16, so as to be made incident on the terahertz-wave detector 33 that will be explained later.

On the other hand, a pump light optical path C2 through which the pump light 48 propagates is provided with a delay unit 21 and a modulator 22. The delay unit 21, which is constructed by a pair of mirrors 23, 24 and a reflection prism 25 disposed on a movable stage 26, can adjust a delay in the pump light 48 by moving the position of the reflection prism 25 back and forth with respect to the pair of mirrors 23, 24. The modulator 22 is a part which switches between transmitting and blocking the pump light 48 by an optical chopper, for example. According to a signal from the controller 5, the modulator 22 modulates the switching between transmitting and blocking the pump light 48 at 1 kHz, for example.

The pump light 48 propagated through the pump light optical path C2 impinges on a mirror 28 and then is converged by a lens 27, so as to be made incident on the integral prism 3. The internal total reflection prism 31 constituting the integral prism 3 is formed by Si, for example. As illustrated in Fig. 2, the internal total reflection prism 31 has an entrance surface 31a to which the terahertz-wave generator 32 is integrally secured and an exit surface 31b to which the terahertz-wave detector 33 is integrally secured. The upper face of the internal total reflection prism 31 forms a flat total reflection surface 31c to be arranged with an object to be measured 34, from which various optical constants such as refractive index, dielectric constant, and absorption coefficient are measured. In this embodiment, the object 34 is assumed to be a solid object in such a form as powder.

The total reflection surface 31c is processed so as to become a mirror surface for a terahertz wave and a sand surface for near infrared rays. Specifically, the total reflection surface 31 c is processed such that its surface roughness Ra = 10 $\mu$m, for example. As a consequence, the total reflection surface 31c irradiated with near infrared rays through the same optical path as with a terahertz wave T scatters the near infrared rays at a position where the terahertz wave T is totally reflected. Visually seeing this scattering can ascertain the position at which the terahertz wave T is totally reflected and a position at which the object 34 is to be arranged.

A first optical surface 31d for collimating the terahertz wave T generated in the terahertz-wave generator 32 toward the total reflection surface 31 c is provided between the entrance surface 31a and the total reflection surface 31 c. A second optical surface 31e for converging the terahertz wave T totally reflected by the total reflection surface 31c toward the exit surface 31b is provided between the total reflection surface 31c and the exit surface 31b. The first and second optical surfaces 31d, 31e are formed by curving the bottom face of the internal total reflection prism 31 into a predetermined form.

Nonlinear optical crystals of ZnTe and the like, antenna elements such as optical switches using GaAs, semiconductors such as InAs, and superconductors, for example, can be employed as the terahertz-wave generator 32. The pulse of terahertz waves generated from these elements is in the order of several picoseconds in general. When a nonlinear optical crystal is used as the terahertz-wave generator 32, the pump light 48 incident on the terahertz-wave generator 32, if any, is converted into the terahertz wave T by a nonlinear optical effect. Thus generated terahertz wave T is totally reflected by the upper face of the internal total reflection prism 31 and made incident on the terahertz-wave detector 33.

Electrooptical crystals of ZnTe and the like and antenna elements such as optical switches using GaAs, for example, can be employed as the terahertz-wave detector 33. When the terahertz wave T and the probe light 49 are incident on the terahertz-wave detector 33 at the same time in the case where an electrooptical crystal is used as the terahertz-wave detector 33, the probe light 49 incurs birefringence due to the Pockels effect. The amount of birefringence in the probe light 49 is in proportion to the electric field intensity of the terahertz wave T. Therefore, detecting the amount of birefringence of the probe light 49 makes it possible to sense the terahertz wave T.

For example, a thermosetting adhesive is used for securing the terahertz-wave generator 32 and the terahertz-wave detector 33. Preferably, the adhesive used here is transparent at the wavelength of the terahertz wave T and has a refractive index in the middle between each of the respective refractive indexes of the terahertz-wave generator 32 and terahertz-wave detector 33 and the refractive index of the internal total reflection prism 31 or equivalent to any of them.

A wax transparent at the wavelength of the terahertz wave T may be melted and coagulated in place of the adhesive, or marginal parts of the terahertz-wave generator 32 and terahertz-wave detector 33 may be secured with the adhesive while the terahertz-wave generator 32 and terahertz-wave detector 33 are in direct contact with the entrance surface 31a and exit surface 31b, respectively.

As illustrated in Fig. 1, the detection unit 4 for detecting the terahertz wave T is constituted by a quarter wave plate 41, a polarizer 42, a pair of photodiodes 43, 43, a differential amplifier 44, and a lock-in amplifier 47, for example. The probe light 49 reflected by the terahertz-wave detector 33 is guided by the mirror 45 toward the detection unit 4, converged by a lens 46, so as to be transmitted through the quarter wave plate 41, and then separated by the polarizer 42, which is a Wollaston prism or the like, into vertical and horizontal linearly polarized light components. The vertical and horizontal linearly polarized light components are converted into their respective electric signals by the pair of photodiodes 43, 43, while the difference therebetween is detected by the differential amplifier 44. The output signal from the differential amplifier 44 is amplified by the lock-in amplifier 47 and then fed to the data analyzer 6.

The differential amplifier 44 outputs a signal having an intensity in proportion to the electric field intensity of the terahertz wave T when the terahertz wave T and the probe light 49 are incident on the terahertz-wave detector 33 at the same time, but no signal when not. An evanescent component emitted when the terahertz wave T is reflected by the total reflection surface 31c of the internal total reflection prism 31 interacts with the object 34 arranged on the total reflection surface 31c of the internal total reflection prism 31, thereby changing the reflectance of the terahertz wave T from that in the case where the object 34 is not in place. Therefore, measuring the change in reflectance of the terahertz wave T can evaluate the spectroscopic characteristic of the object 34.

The data analyzer 6 is a part which performs data analysis processing of total reflection spectroscopic measurement according to an analysis program exclusively used by the total reflection spectrometer 1, for example, and is physically a computer system having a CPU (central processing unit), a memory, an input device, the display unit 7, and the like. The data analyzer 6 executes data analysis processing according to a signal fed from the lock-in amplifier 47 and causes the display unit 7 to display results of analysis.

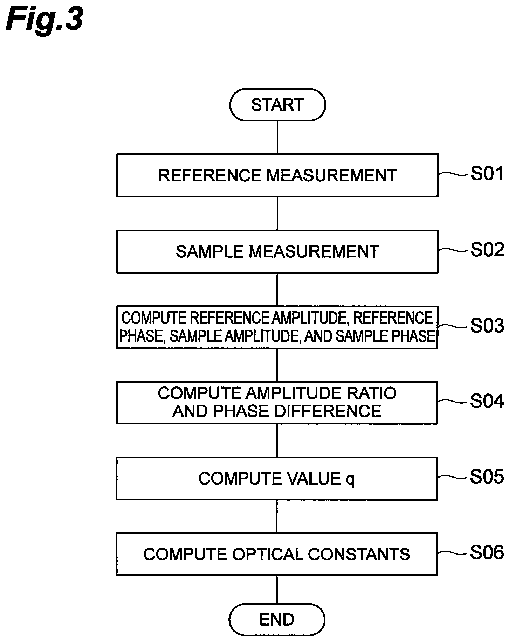

Fig. 3 is a flowchart illustrating a procedure of measuring optical constants concerning the object 34. The following explanation will assume a case where the terahertz wave T is incident as p-polarized light on the total reflection surface 31c of the internal total reflection prism 31.

First, as illustrated in Fig. 3, the total reflection spectrometer 1 is used for performing reference measurement and sample measurement (steps S01 and S02). In the reference measurement, a terahertz wave $T_{ref}$ totally reflected by the total reflection surface 31c not arranged with the object 34 is measured. In the sample measurement, a terahertz wave $T_{sig}$ totally reflected by the total reflection surface 31c arranged with the object 34 is measured. It is not necessary to perform the reference measurement each time when measuring an optical constant. For example, one reference measurement result may be stored and repeatedly used for optical constant measurements thereafter.

Subsequently, the terahertz waves $T_{ref}$ and $T_{sig}$ are respectively Fourier-transformed, so as to determine an amplitude $R_{ref}$ and a phase $\Phi_{ref}$, and an amplitude $R_{sig}$ and a phase $\Phi_{sig}$ (step S03).

Next, the ratio P between the amplitudes $R_{ref}$ and $R_{sig}$ is determined according to expression (1), and the phase difference $\Delta$ between the phases $\Phi_{ref}$ and $\Phi_{sig}$ is determined according to expression (2) (step S04).

[Math. 1]

$$P = \left| \frac{R_{sig}}{R_{ref}} \right| \quad \cdots \ (1)$$

[Math. 2]

$$\Delta = \Phi_{sig} - \Phi_{ref} \quad \cdots \ (2)$$

Further, using the above-mentioned ratio P and phase difference $\Delta$, a value q is defined as in expression (3) (step S05).

[Math. 3]

$$q = \frac{1 - Pe^{-i\Delta}}{1 + Pe^{-i\Delta}} \quad \cdots \ (3)$$

Here, let $\theta_i$ (see Fig. 2) be the angle at which the terahertz wave T is incident on the internal total reflection prism 31, and $\theta_{ref}$ and $\theta_{sig}$ be the respective refraction angles determined by Snell's law in the reference measurement and sample measurement. Further, using the Fresnel equations of reflection, $Pe^{-i\Delta}$ in the expression (3) can be represented by the following expression (4):

[Math. 4]

$$Pe^{-i\Delta} = \frac{\tan(\theta_i - \theta_{sig})}{\tan(\theta_i + \theta_{sig})} \cdot \frac{\tan(\theta_i + \theta_{ref})}{\tan(\theta_i - \theta_{ref})} \quad \cdots \ (4)$$

Substituting the above-mentioned expression (4) into the expression (3) and modifying it yields the following expression (5):

[Math. 5]

$$\sin\theta_{sig} \cdot \cos\theta_{sig} = \frac{q \cdot \sin^2\theta_i \cos^2\theta_i + \sin\theta_i \cos\theta_i \sin\theta_{ref} \cos\theta_{ref}}{\sin\theta_i \cos\theta_i + q \cdot \sin\theta_{ref} \cos\theta_{ref}} \quad \cdots \ (5)$$

Letting $n_{prism}$ be the complex refractive index of the material constituting the internal total reflection prism 31, and $n_{sample}$ be the complex refractive index of the object 34, the Snell's law is as in the following expression (6), while the square of the complex refractive index of the object 34 is represented by expression (7). Therefore, substituting the expression (5) into the expression (7) can determine the complex refractive index of the object 34, thereby deriving desirable optical constants of the object 34 (step S06).

[Math. 6]

$$n_{prism} \sin \theta_i = n_{sample} \sin \theta_{sig} \quad \cdots \quad (6)$$

[Math. 7]

$$n_{sample}{}^2 = \frac{\sin^2 \theta_i \cdot \left(1 - \sqrt{1 - 4 \cdot \left(\sin \theta_{sig} \cdot \cos \theta_{sig}\right)^2}\right)}{2 \cdot \left(\sin \theta_{sig} \cdot \cos \theta_{sig}\right)^2} \cdot n_{prism}{}^2 \quad \cdots \quad (7)$$

The reference measurement and sample measurement will now be explained in more detail.

As mentioned above, this embodiment is assumed to measure the solid object 34 in such a form as powder. For accurately measuring optical constants concerning the solid object 34, it is necessary for the object 34 and the total reflection surface 31c to be placed sufficiently close to each other so that the interaction between the evanescent component of the terahertz wave T and the object 34 is generated stably.

Therefore, a method which totally reflects a terahertz wave by a total reflection surface while pressing the object onto the total reflection surface and the like have conventionally been employed, though there is a case where a minute gap occurs between the total reflection surface and the object even when such a method is used. This minute gap varies for each measurement, whereby the interaction between the evanescent component and the object may fluctuate upon each measurement. When the object is pressed against the total reflection surface with an excessive force in order to eliminate the minute gap, on the other hand, the prism may be deformed or damaged.

By contrast, this embodiment uses a liquid 50 when performing the reference measurement and sample measurement. The liquid 50 is required to be incapable of dissolving the object 34 and preferably does not absorb the terahertz wave T. Fluorine-based inert liquids, silicone oil, and the like are used as the liquid 50. Examples of the fluorine-based inert liquids include perfluorocarbon and hydrofluorocarbon. Among these liquids, perfluorocarbon is preferred in particular in terms of insolubility and absorbency. The fluorine-based inert liquids and silicone oil are hard to volatilize and thus are preferred not only in that no volatile components adversely affect the surroundings, but also in that their environmental load is low. Here, by "does not absorb the terahertz wave" is meant that the absorption coefficient is 20 [cm$^{-1}$] or less, more preferably 10 [cm$^{-1}$] or less, for a terahertz wave within the range of 0.1 [THz] to 10 [THz], for example.

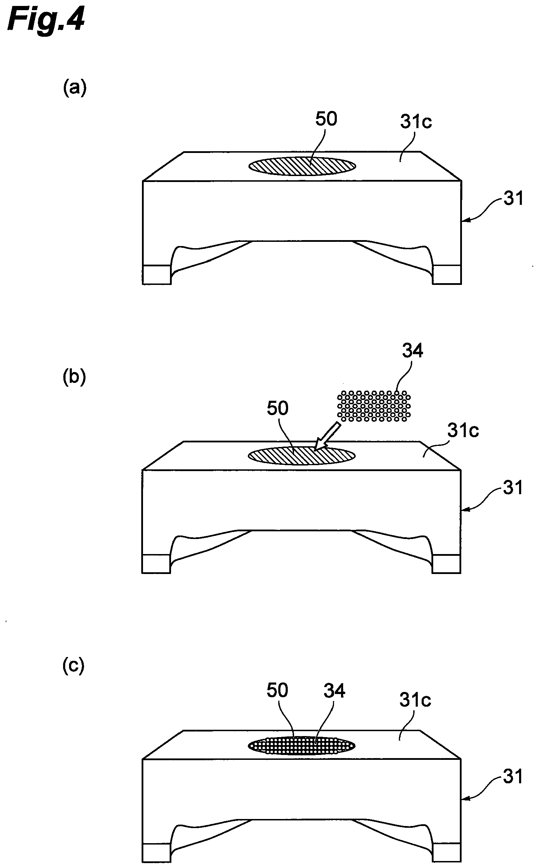

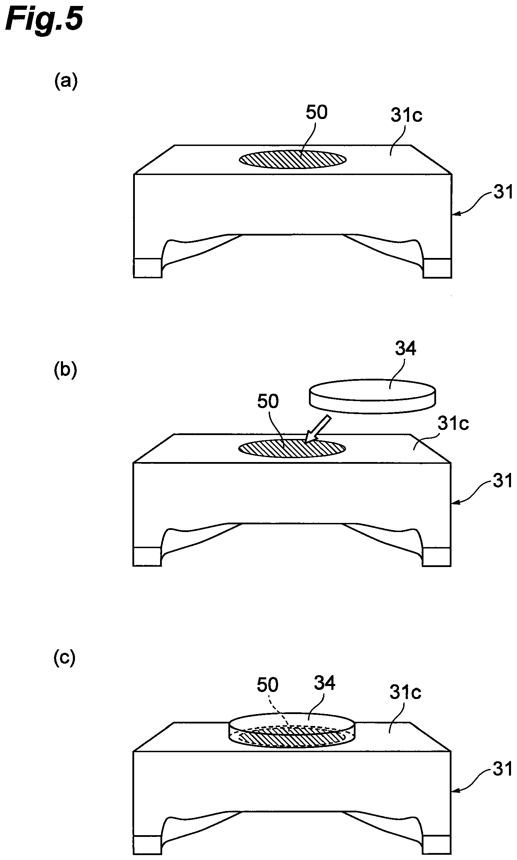

First, a position to be arranged with the liquid 50 is ascertained in the reference measurement. In this ascertainment, the total reflection surface 31c is irradiated with near infrared rays through the same optical path as with the terahertz wave T. Since the total reflection surface 31c is a sand surface with respect to the near infrared rays as mentioned above, the total reflection surface 31c irradiated with the near infrared rays through the same optical path as with the terahertz wave T scatters the near infrared rays at a position where the terahertz wave T is totally reflected, thereby indicating the position to be arranged with the liquid 50. The near infrared rays used here preferably have a wavelength of 1 μm to 2 μm when the internal total reflection prism 31 is formed by Si, for example, in view of their passing through the terahertz-wave generator 32 while being hard to be absorbed by the internal total reflection prism 31. The liquid 50 is arranged at thus ascertained position (see Figs. 4(a) and 5(a)), and the terahertz wave $T_{ref}$ is measured.

In the sample measurement, the terahertz wave $T_{sig}$ is measured while the liquid 50 is interposed between the total reflection surface 31c and the object 34. When powdery, the object 34 is put into the liquid 50 arranged on the total reflection surface 31c (see Fig. 4(b)), for example, so as to be immersed wholly in the liquid 50 (see Fig. 4(c)). This allows a force such as an adhesion force, for example, to act between the liquid 50 and the object 34, thereby placing the object 34 sufficiently close to the total reflection surface 31 c. In the case of the powdery object 34, it is sufficient for the object 34 and the liquid 50 to be fully mixed with each other; the object 34 and the liquid 50 may be mixed with each other beforehand and then arranged on the total reflection surface 31c.

In an unclaimed embodiment, when the object 34 is flaky, the liquid 50 is applied onto the total reflection surface 31c, and then the object 34 is arranged thereon (see Figs. 5(b) and 5(c)), for example. This allows a force such as an adhesion force, for example, to act between the liquid 50 and the object 34, as in the case of powder, thereby placing the object 34 sufficiently close to the total reflection surface 31c. The liquid 50 may be applied to the bottom face of the object 34 beforehand and then arranged on the total reflection surface 31c.

As explained in the foregoing, the liquid 50 is interposed between the total reflection surface 31c and the object 34 in this embodiment. Therefore, a force such as an adhesion force acting between the liquid 50 and the object 34 can place the object 34 closer to the total reflection surface 31c, thereby stably generating the interaction between the evanescent component and the object 34. When the object 34 is powdery, the adhesion force or the like can bring powder particles of the object 34 closer to each other, thereby more stably generating the interaction between the evanescent component and the object 34. On the other hand, this makes it unnecessary to press the object 34 physically against the total reflection surface 31c, whereby the internal total reflection prism 31 can be inhibited from being deformed or damaged. Hence, this method can accurately measure optical constants concerning the object 34 by utilizing the adhesion force. Since the liquid 50 incapable of dissolving the object 34 is used, the measurement of the object 34 is not inhibited by the liquid 50.

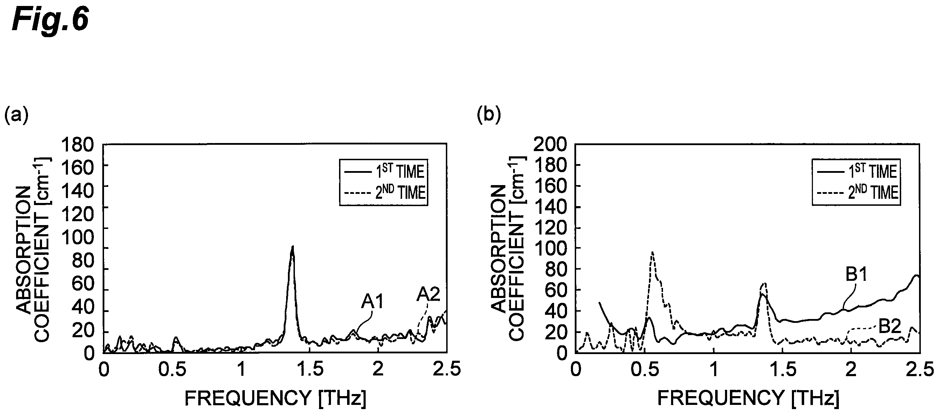

Fig. 6(a) is a chart illustrating an example of absorption characteristics of the object 34 measured by this embodiment. In this example, the object 34 is lactose, while the liquid 50 is perfluorocarbon. As illustrated in Fig. 6(a), absorption characteristics A1 and A2 of the object 34 measured at first and second times, respectively, exhibit substantially equal tendencies, in which peak values and their corresponding frequencies and the like substantially coincide with each other in particular. That is, the measurement results of absorption characteristics in the object 34 are seen to be stable without fluctuating between measurements.

Fig. 6(b) is a chart illustrating absorption characteristics of the object 34 measured without the liquid 50 as a comparative example. The object 34 is lactose in the comparative example as well. As illustrated in Fig. 6(b), absorption characteristics B1 and B2 of the object 34 measured at first and second times, respectively, exhibit a peak value at about 1.4 THz as with the absorption characteristics A1 and A2 in the case using the liquid 50. However, the absorption characteristics B1 and B2 also exhibit peak values at other frequencies which greatly differ from each other between the absorption characteristics B1 and B2. That is, the comparative example indicates that the absorption characteristic measurement results of the object 34 greatly fluctuate upon each measurement and thus are unstable.

The embodiment uses the terahertz wave $T_{ref}$ totally reflected while only the liquid 50 is arranged on the total reflection surface 31c as a reference terahertz wave, so as to cancel out influences of absorption of the terahertz wave $T_{sig}$ by the liquid 50. Therefore, optical constants concerning the object 34 can be measured more accurately.

Using a fluorine-based inert liquid, silicone oil, or the like which does not absorb a terahertz wave inhibits the liquid 50 from absorbing the terahertz wave $T_{sig}$, whereby optical constants concerning the object 34 can be measured more accurately.

The present invention is not restricted to the preferred embodiment thereof explained in the foregoing.

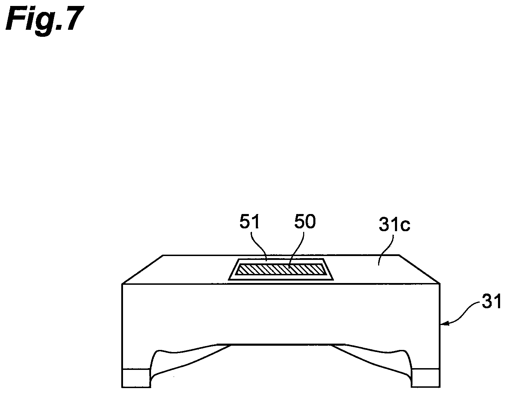

For example, as illustrated in Fig. 7, the liquid 50 may be disposed within a ring-shaped enclosure 51 which is arranged on the total reflection surface 31c in the reference measurement and sample measurement. Though Fig. 7 illustrates a case where the enclosure 51 is rectangular in a planar view, this is not restrictive. The enclosure 51 may have any form such as circles and polygons, for example, as long as a closed region is formed thereby. The enclosure 51 is made of silicone rubber, for example. Using the enclosure 51 can retain the liquid 50 on the total reflection surface 31c, whereby the liquid 50 can securely be interposed between the total reflection surface 31c and the object 34. Preferably, the enclosure 51 attaches to the total reflection surface 31c by autohesion. In this case, the enclosure 51 can easily be removed after completing the measurement.

**Industrial Applicability**

The present invention can be utilized for total reflection spectroscopic measurement using a terahertz wave.

**Reference Signs List**

31...internal total reflection prism; 31c...total reflection surface; 34...object to be measured; 50...liquid; T...terahertz wave; 51...enclosure

**Claims**

1. A total reflection spectroscopic measurement method comprising arranging solid object (34) to be measured on a total reflection surface of a prism (31c) and measuring an optical constant concerning the object (34) according to a terahertz wave totally reflected by the total reflection surface (31c) after passing the inside of the prism (31);
   wherein a liquid (50) incapable of dissolving the object, and incapable of absorbing the terahertz wave, is interposed at least between the total reflection surface (31c) and the object (34);
   wherein the object (34) is powdery;
   wherein the object (34) is put into the liquid (50) arranged on the total reflection surface (31c) so as to be immersed wholly in the liquid (50) or the object (34) and the liquid (50) are fully mixed with each other beforehand and then arranged on the total reflection surface (31c).

2. A total reflection spectroscopic measurement method according to claim 1, wherein the optical constant concerning the object (34) is measured while using a terahertz wave totally reflected when only the liquid (50) is arranged on the total reflection surface (31c) as a reference terahertz wave.

3. A total reflection spectroscopic measurement method according to claim 1, wherein, as the liquid (50), a fluorine-based inert liquid is used.

4. A total reflection spectroscopic measurement method according to claim 1, wherein silicone oil is used as the liquid (50).

5. A total reflection spectroscopic measurement method according to one of claims 1 to 4, wherein a ring-shaped enclosure (51) is arranged on the total reflection surface (31c), and the liquid (50) is disposed within the enclosure (51).

**Patentansprüche**

1. Stereoskopisches Messverfahren mit Totalreflexion, umfassend Anordnen eines festen Objekts (34), welche zu messen sind, an einer Totalreflexions-Oberfläche eines Prismas (31c) und Messen einer optischen Konstante, welche das Objekt (34) betrifft, gemäß einer Terahertz-Welle, welche durch die Totalreflexions-Oberfläche (31c) totalreflektiert wird, nach einem Durchtreten der Innenseite des Prismas (31);
wobei eine Flüssigkeit (50), welche nicht in der Lage ist, das Objekt aufzulösen, und nicht in der Lage ist, die Terahertz-Welle zu absorbieren, wenigstens zwischen der Totalreflexions-Oberfläche (31c) und dem Objekt (34) angeordnet wird;
wobei das Objekt (34) pulvrig ist;
wobei das Objekt (34) in die Flüssigkeit (50) gegeben wird, welche an der Totalreflexions-Oberfläche (31c) angeordnet ist, um vollständig in der Flüssigkeit (50) eingetaucht zu sein, oder das Objekt (34) und die Flüssigkeit (50) vorab miteinander vollständig vermischt werden und dann an der Totalreflexions-Oberfläche (31c) angeordnet werden.

2. Stereoskopisches Messverfahren mit Totalreflexion nach Anspruch 1, wobei die optische Konstante, welche das Objekt (34) betrifft, gemessen wird, während eine Terahertz-Welle verwendet wird, welche totalreflektiert wird, wenn nur die Flüssigkeit (50) an der Totalreflexions-Oberfläche (31c) angeordnet ist, als eine Referenz-Terahertz-Welle.

3. Stereoskopisches Messverfahren mit Totalreflexion nach Anspruch 1, wobei, als die Flüssigkeit (50), eine Fluor-basierte inerte Flüssigkeit verwendet wird.

4. Stereoskopisches Messverfahren mit Totalreflexion nach Anspruch 1, wobei als die Flüssigkeit (50) Silikonöl verwendet wird.

5. Stereoskopisches Messverfahren mit Totalreflexion nach einem der Ansprüche 1 bis 4, wobei ein ringförmiger Verschluss (51) an der Totalreflexions-Oberfläche (31c) angeordnet wird und die Flüssigkeit (50) innerhalb des Verschlusses (51) angeordnet wird.

**Revendications**

1. Procédé de mesure spectroscopique par réflexion totale comprenant les étapes consistant à agencer un objet solide (34) à mesurer sur une surface de réflexion totale d'un prisme (31c) et à mesurer une constante optique concernant l'objet (34) selon une onde térahertz totalement réfléchie par la surface de réflexion totale (31c) après le passage à l'intérieur du prisme (31) ;
dans lequel un liquide (50) incapable de dissoudre l'objet, et incapable d'absorber l'onde térahertz, est interposé au moins entre la surface de réflexion totale (31c) et l'objet (34) ;
dans lequel l'objet (34) est pulvérulent ;
dans lequel l'objet (34) est placé dans le liquide (50) agencé sur la surface de réflexion totale (31c) de manière à être complètement immergé dans le liquide (50) ou l'objet (34) et le liquide (50) sont entièrement mélangés l'un avec l'autre préalablement et ensuite agencés sur la surface de réflexion totale (31c).

2. Procédé de mesure spectroscopique par réflexion totale selon la revendication 1, dans lequel la constante optique concernant l'objet (34) est mesurée tout en utilisant une onde térahertz totalement réfléchie lorsque seul le liquide (50) est agencé sur la surface de réflexion totale (31c) en tant qu'onde térahertz de référence.

3. Procédé de mesure spectroscopique par réflexion totale selon la revendication 1, dans lequel, comme étant le liquide (50), un liquide inerte à base de fluor est utilisé.

4. Procédé de mesure spectroscopique par réflexion totale selon la revendication 1, dans lequel une huile de silicone est utilisée comme étant le liquide (50).

5. Procédé de mesure spectroscopique par réflexion totale selon l'une des revendications 1 à 4, dans lequel une enceinte en forme d'anneau (51) est agencée sur la surface de réflexion totale (31c), et le liquide (50) est disposé à l'intérieur de l'enceinte (51).

*Fig.1*

# Fig.2

# Fig.3

```
                    ┌─────────┐
                    │  START  │
                    └─────────┘
                         │
    ┌────────────────────────────────────────┐
    │        REFERENCE MEASUREMENT            │── S01
    └────────────────────────────────────────┘
                         │
    ┌────────────────────────────────────────┐
    │         SAMPLE MEASUREMENT              │── S02
    └────────────────────────────────────────┘
                         │
    ┌────────────────────────────────────────┐
    │ COMPUTE REFERENCE AMPLITUDE, REFERENCE  │── S03
    │ PHASE, SAMPLE AMPLITUDE, AND SAMPLE PHASE│
    └────────────────────────────────────────┘
                         │
    ┌────────────────────────────────────────┐
    │        COMPUTE AMPLITUDE RATIO          │── S04
    │         AND PHASE DIFFERENCE            │
    └────────────────────────────────────────┘
                         │
    ┌────────────────────────────────────────┐
    │           COMPUTE VALUE q               │── S05
    └────────────────────────────────────────┘
                         │
    ┌────────────────────────────────────────┐
    │       COMPUTE OPTICAL CONSTANTS         │── S06
    └────────────────────────────────────────┘
                         │
                    ┌─────────┐
                    │   END   │
                    └─────────┘
```

# *Fig.4*

(a)

(b)

(c)

# *Fig.5*

(a)

(b)

(c)

*Fig.6*

(a)

(b)

EP 2 690 426 B1

# Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3950818 B
- EP 2128600 A
- EP 1630542 A